# EUROPEAN PATENT APPLICATION

(11) **EP 4 506 853 A1**
(43) Date of publication of application: **12.02.2025**
(21) Application number: 23382832.6
(22) Date of filing: 08.08.2023
(51) Int. Cl.: G06K 19/02, B32B 21/08, B32B 37/06

(54) **METHOD FOR MANUFACTURING A SMART CARD WITH A WOODEN LAYER**

(71) Applicant: Giesecke+Devrient ePayments GmbH, 81677 München (DE)
(72) Inventor: Fernandez, Oscar M., 81677 München (DE); Tarantino, Peter, 81677 München (DE); Tarantino, Thomas, 81677 München (DE)
(74) Representative: LKGLOBAL Lorenz & Kopf Patentanwalt Attorney at Law PartG mbB

(57) **Abstract**

A method (150) for manufacturing a smart card (10) is described. The method comprises: in a first step (152), providing a front layer (111), a rear layer (112), and an antenna layer (113) of a smart card body (11), wherein at least the front layer (111) comprises wood; in a second step (154), applying thermal energy to the front layer (111) by a thermal energy source (50, 70, 80) in order to heat the front layer (111) for a first predetermined period of time to a first predetermined temperature; in a third step (156), joining the front layer (111), the rear layer (112), and the antenna layer (113) with the antenna layer (113) being arranged between the front layer (111) and the rear layer (112). The third step (156) is carried out after the second step (154) and prior to the front layer (111) being joined with the antenna layer (113).

## Description

### Technical field

The description relates to a method for manufacturing a smart card, in particular a smart card with a wooden surface layer. The smart cards referred to in this description are, for example, smart cards containing a microcontroller with RFID (Radio-Frequency Identification) properties, or so-called dual-interface smart cards.

### Background

Card-shaped data carriers, in particular smart cards, are used in many areas, for example to carry out cashless payment transactions, as identification documents, or to prove access authorizations. In the context of this description, such data carriers are referred to as smart cards for all applications.

A smart card has a card body and an integrated circuit embedded in the card body, for example in the form of a chip module with a chip. The chip module is inserted into a cavity or module opening of the card body.

Smart cards can contain an integrated electrical oscillating circuit via which energy can be transmitted to electronic components of the smart card. This is usually done by supplying energy to the oscillating circuit via a magnetic field. This energy can then be used to perform processing and contactless communication functions of the smart card. For example, smart card controllers with RFID functionality can be used. The oscillating circuit is formed by a coil with an additional capacitor on the chip module.

A smart card can also be a so-called dual interface (DI) card with corresponding functionality, in which the card body of the smart card is partly or completely made of metal. The way such a card works is that a chip module is used which itself contains a coil (coil-on modules). This coil couples to the metallic card body.

Dual-interface smart cards are smart cards that can be used for both contact and contactless communication. When they are used as bank cards or credit cards, they are usually in the so-called ID-I format (according to ISO 7810). However, the present invention is not limited to this format. Contact communication is carried out via exposed contact areas, the so-called contact pad, while contactless communication is generally carried out via an antenna coil running inside the card body and a resonant circuit as described above. Both the contact areas and the antenna coil are connected to an IC chip, for example electrically conductively or inductively coupled. A smart card may also be integrated into, or even emulated by, a smartphone or other portable electronic device.

### Summary of the invention

It may be considered an object to manufacture smart cards with a wooden surface with an increased lifetime and resilience against environmental influences.

This object is solved by the method of the independent claim. Additional embodiments can be derived from the dependent claims and the following description.

According to an aspect, a method for manufacturing a smart card comprises the steps: in a first step, providing a front layer, a rear layer, and an antenna layer of a smart card body, wherein at least the front layer comprises wood; in a second step, applying thermal energy to the front layer by a thermal energy source in order to heat the front layer for a first predetermined period of time to a first predetermined temperature; in a third step, joining the front layer, the rear layer, and the antenna layer with the antenna layer being arranged between the front layer and the rear layer. The third step is carried out after the second step and prior to the front layer being joined with the antenna layer.

The smart card may be a smart card that includes electronic components as described above and hereinafter. In particular, the antenna layer includes electronic circuitry and a processor. However, some of the components of the smart card may also be included in the front layer, e.g., a contact pad with contact connections. The antenna layer may be made of plastic or any other suitable material. However, the front layer is applied with thermal energy prior to the joining of the layers of the card body, especially prior to the joining of the front layer and the antenna layer. Therefore, an upper surface of the front layer may be charred or darkened by the thermal energy applied by the thermal energy source without the risk of damaging the electronic components of the antenna layer.

In case the front layer of the smart card includes electronic components, these may be included into the front layer after the second step.

Thus, a smart card with renewable resources (wood) may be manufactured, thereby increasing the sustainability of the smart card manufacturing process.

Heating the front layer for a predetermined period of time at a given temperature contributes to making the wood durable and resilient, especially by contributing to an increased resistance of the wood against moisture. Furthermore, by the process described herein, the optical appearance of the smart card may be designed in accordance with predetermined requirements. For example, by varying the temperature and the time for applying the thermal energy to the front layer, the color and the color tone of the charred or darkened surface of the front layer may be varied.

The front layer may include or may be completely made of wood of any type. Depending on the type of wood used for the front layer, the predetermined temperature and the predetermined period of time in the second step may vary. Different types of wood get dark or char at different temperatures and after different period of time of applying said temperature.

By applying the method described herein, using solvent and other chemical substances for preparation of wood may be avoided, thus contributing to keeping the natural look and feel of wood and reducing usage of chemical substances.

Merely as an example and without limiting the scope of the application, the wood may be Birch or Maple wood. However, other types of wood may be used, depending on the parameters of the method (temperature and time for applying the thermal energy) and/or design requirements of the smart card.

The front layer may have a thickness of a few tenths of a millimeter.

In one embodiment, the rear layer comprises wood and the method further comprises, after the second step and prior to the third step, applying thermal energy to the rear layer by the thermal energy source in order to heat the rear layer for a second predetermined period of time to a second predetermined temperature.

The type of wood of the rear layer may be identical to the type of wood of the front layer. Furthermore, the thickness of the rear layer may be identical or different than the thickness of the front layer.

In one example, the second predetermined period of time may be identical to the first predetermined period of time, and/or the second predetermined temperature may be identical to the first predetermined temperature. In that case, the color and the color tone of the rear layer is similar to color and/or color tone of the front layer, given that the material and the physical dimensions of the rear layer and the front layer are identical.

However, it is also conceivable that the second predetermined period of time differs from the first predetermined period of time, and/or the second predetermined temperature differs from the first predetermined temperature. In that case, the color and/or the color tone of the rear layer differs from the color and/or tone of the front layer. Also, the properties like resistance to external influences varies with varying period of time and temperature at which the thermal energy is applied. In case these properties are desired to be different for the front layer and the back layer, the first/second predetermined period of time and/or first/second predetermined temperature for treating the front and rear surface can be varied.

In general, the rear layer may be treated similar to the front layer. That is, any steps described with respect to the front layer may be applied in a similar manner to the rear layer.

In another embodiment, in the third step, the front layer, the rear layer, and the antenna layer are joined by a lamination process.

In particular, the third step is carried out after the front layer and optionally the rear layer are charred/darkened in the second step and the front layer, the antenna layer, and the rear layer are laminated together by applying heat and pressure to the layers stacked in the respective order. The temperature used for the lamination process may be much lower than the first and second temperature used in the second step. Thus, the temperature used in the lamination process does not damage the electronic circuitry of the antenna layer. The temperature used in the lamination process is set so that an adhesive like a glue or a resin arranged between the layers melts and joins the layers together once the smart card cools down.

In another embodiment, the method further comprises, after the third step, applying a clear coating to the front layer and/or to the rear layer.

However, applying a clear coating like lacquer to the outer surfaces of the front layer and/or the rear layer is an optional step. Depending on the type of wood, the front layer and/or the rear layer are sufficiently durable and resilient for an expected lifetime of the smart card even without applying an additional coating.

In another embodiment, the method further comprises, as part of the second step, or after the second step and prior to the third step, applying a personalization feature to the front layer and/or to the rear layer by locally applying heat to the front layer and/or to the rear layer.

The personalization may include providing a name of the card holder and other relevant information (card ID, valid period, etc.). The personalization may be applied to the front and/or rear layer by charring the surface in accordance with a pattern (alphanumeric signs like letters and/or digits) at a higher temperature than the first and/or second predetermined temperature or a duration longer than the first and/or second predetermined period of time. Thus, the personalization information is burned into the outer surface of the front and/or rear layer. This, of course, requires that the charred outer surface of the front and/or rear layer is lighter than the color and/or color tone of the personalization information.

Applying heat locally means that heat is applied so that the personalization information is burnt into the outer surface of the front layer and/or rear layer. A pattern corresponds to the letters and/or digits to be included in the outer surface of the front layer and/or the rear layer.

In another embodiment, the personalization feature is applied by using the thermal energy source used in the second step.

Although the personalization information is applied to the front layer and/or rear layer at different temperatures and/or with another period of time for applying the temperature, the same thermal energy source as used for charring/darkening the outer surface of the front layer and/or the rear layer may be used for the applying the personalization information. However, the thermal energy source may be operated with different operation parameters in these steps, i.e., at different temperatures and/or for a different period of time.

In another embodiment, in the second step, thermal energy is applied by the thermal energy source to an entirety of an outer surface of the front layer.

Thus, the front layer has an almost uniform and homogenous color and color tone without glossing over the natural appearance of wood.

In another embodiment, the first predetermined temperature in the second step is equal to or above an ignition temperature of the front layer.

The first predetermined temperature is applied for a short period of time such that the front layer does not burn, but its surface is charred. In order to charr the surface and close the pores of the wood, a temperature above the ignition temperature is preferably applied to the wood.

In another embodiment, the first predetermined temperature in the second step is above 280°C.

Depending on the type of wood of the front layer and/or the rear layer, the ignition temperature may be in the indicated range of temperature. However, this range is not to be construed as a limitation. For other types of wood used, other temperatures may apply.

The temperature in the second step may have an impact on the color of the surface of the treated front and/or rear layer.

For example and without limitation, the first predetermined period of time in the second step is a few seconds, e.g., between 2 and 6 seconds.

Depending on the type of wood of the front layer and/or the rear layer, the wood may be subject to the predetermined temperature for a time within the indicated range. However, this range is not to be construed as a limitation. For other types of wood used, a different period of time may apply.

The period of time applied in the second step may have an impact on the color tone of the surface of the treated front and/or rear layer.

In another embodiment, the thermal energy source is a beam source configured to emit a laser beam, a concentrated fire jet, high density plasma towards the front layer.

Thus, heat is applied to the surface of the front and/or rear layer by a beam. The beam is configured so that it causes the surface of the wood to be heated to the predetermined temperature.

The thermal energy source may comprise a controller or may be communicatively connected to a controller which controls the thermal energy source such that the beam is moved along the surface of the front (and/or rear) layer to perform the second step.

In another embodiment, the thermal energy source is configured to perform corona treatment of the front layer.

Corona treatment is a surface modification technique that uses a plasma to modify properties of the surface of the wooden material of the front layer.

In another embodiment, the thermal energy source is a heating plate that is heated to the first predetermined temperature and pressed onto the front layer for the first predetermined period of time.

For example, the heating plate is heated to a predetermined temperature and is then pressed onto the surface of the front layer for the first predetermined time. The heating plate may be heated electrically to the desired temperature value.

The heating plate may be shaped in such a manner that it covers the entire surface of the front layer. Thus, the entire surface is subject to the first predetermined temperature for the same period of time.

In another embodiment, the thermal energy source is a heating roll that is heated to the first predetermined temperature and the heating roll is moved relative to the front layer such that the first predetermined temperature is applied to a contact surface between the heating roll and the front layer for the first predetermined period of time.

The heating roll may contact the front layer along an entire width of the front layer and the heating roll is moved relative to the front layer such that the entire front layer is applied to the heated roll while the heating roll rolls over the front layer at a predetermined rotational speed.

The heating roll and the heating plate may be pressed onto the front layer with a predetermined force to ensure a thermal energy transfer between the plate and/or the roll and the front layer.

The steps of the method may be implemented as an automated process controlled by a controller that commands actuators and the elements referred to herein such that the steps of the method are carried out in an automated manner.

### Brief description of the drawings

Some details are described in more detail below on the basis of the attached drawings. The illustrations are schematic and not to scale. Identical reference signs refer to identical or similar elements. They show:
- Fig. 1: a schematic representation of a dual-interface smart card;
- Fig. 2: a schematic representation of a smart card;
- Fig. 3: a schematic representation of a chip module;
- Fig. 4: a schematic representation of a card body with different layers;
- Fig. 5: a schematic representation of a thermal energy source applying thermal energy to a front layer of a card body by a beam;
- Fig. 6: a schematic representation of a thermal energy source designed as a heating plate applying thermal energy to a front layer of a card body;
- Fig. 7: a schematic representation of a thermal energy source designed as a heating roll applying thermal energy to a front layer of a card body;
- Fig. 8: a schematic representation of the steps of a method for manufacturing a smart card.

### Detailed description

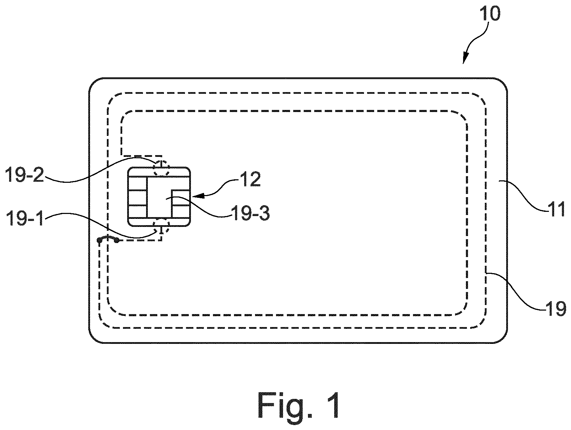

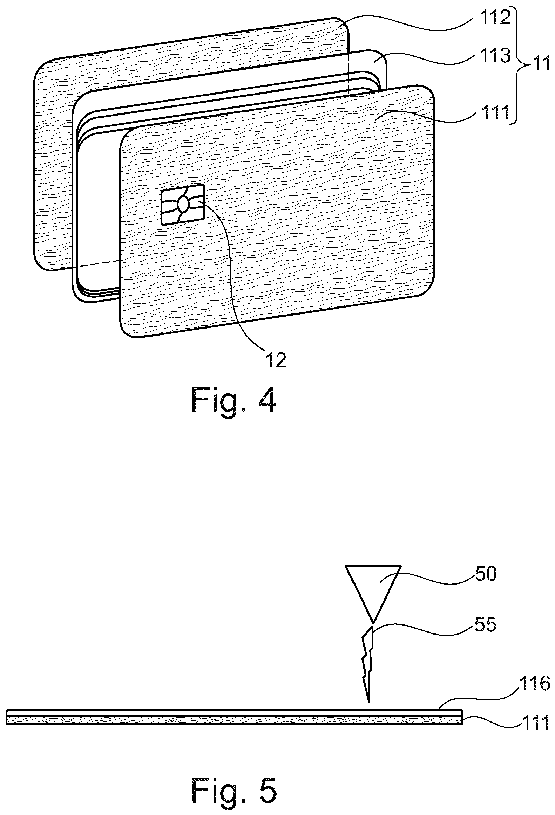

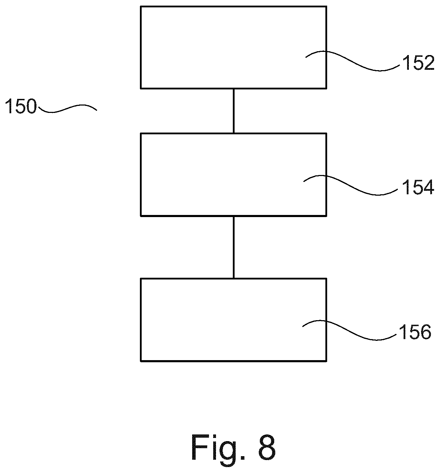

The steps of the method for manufacturing a smart card are schematically shown in Fig. 8. However, Figs. 1 to 7 describe a smart card that is manufactured by the method referred to in Fig. 8 and the smart card is shown at different stages of the manufacturing process. While Figs. 1 to 3 show different types of smart cards and components thereof that can be manufactured with the method described herein, Figs. 4 to 7 show the smart card at other stages of the manufacturing process, as will be described in more detail below.

Fig. 1 shows a schematic top view of a dual-interface smart card 10 in ID-I format with a card body 11. An antenna coil 19 and a chip module 12 are arranged in the card body 11 of the smart card 10. The antenna coil 19 has a contact terminal 19-1, 19-2 at each of its two open ends, via which the antenna coil 19 is conductively connected to the chip module 12. The antenna coil 19 is used for contactless communication of an external device with the chip module 12. For contact communication with the chip module 12, the chip module 12 has a contact pad 19-3 with several contact areas separated from each other.

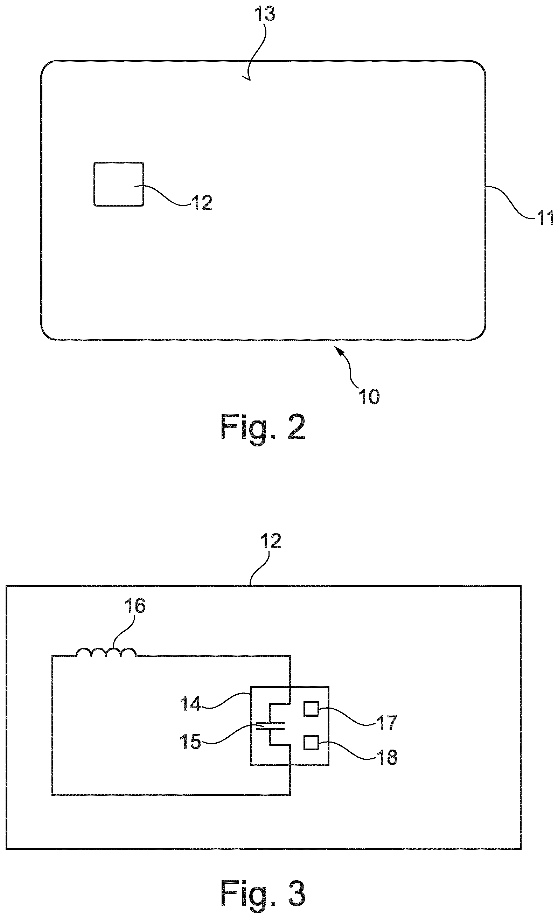

Fig. 2 shows a smart card 10 with a card body 11 in an alternative embodiment. The card body 11 may be partially made of a plastic such as PVC, polycarbonate or the like. The card body may comprise an outer layer not shown here. In particular, the outer layer is the front layer 111 and/or the rear layer 112 described in greater detail with reference to Fig. 4.

The smart card 10 includes a chip module 12 inserted into a main surface 13 of the card body 11 or smart card 10. The chip module 12 may be inserted into a module opening or cavity. The cavity may include a central hole and a peripheral edge region. Here, the cavity is concealed by the inserted chip module 12. The chip module 12 may be bonded or otherwise secured in the cavity, for example held therein by a clamping force.

The chip module 12 includes an inductance like a coil 16. The coil 16 typically has a plurality of turns, for example, about 12 to 16 turns. The turns extend concentrically around a chip or electronic circuit of the chip module 12, for example. The width of a turn may be 50 µm to 70 µm and the spacing between two turns may be 100 µm. The turns may have copper thicknesses up to about 30 µm.

The chip may be implemented, for example, in the form of an integrated circuit and is attached, for example, in a potting compound to an underside of the chip module 12. Power and/or signals are supplied to the integrated circuit via the coil. Thus, an electromagnetic field may be coupled into the coil. For example, the integrated circuit may be or include a smart card controller with RFID functionality.

Fig. 3 shows an equivalent circuit diagram of the chip module 12 of the smart card 10. The chip module 12 includes integrated circuit 14, for example in the form of a chip. The integrated circuit 14 may be soldered to the chip module 12, for example, or may have been flip-chip mounted to the chip module 12. The integrated circuit 14 includes a card controller for the smart card 10. The integrated circuit 14 typically includes a processor 17 for performing control functions for the smart card 10 and for communications and for performing computing operations, for example, for security functions. In addition, the integrated circuit 14 includes a memory 18 for storing and/or making available data.

The integrated circuit 14 further includes a capacitor 15 with a suitable capacitance, which has an influence on the resonant frequency of the oscillating circuit. The capacitance is in the range of a few pF, for example 78 pF. The coil 16 is connected in parallel with the integrated circuit 14.

The coil 16 and the capacitor 15 of the integrated circuit 14 form an oscillating circuit. This oscillating circuit allows the chip module 12 to communicate with a reader external to the smart card 10 (for example, a card reader), a production machine, or even a measuring device. The reader applies energy to the coil 16 via an electromagnetic field, which activates and operates the integrated circuit 14. The coil 16 corresponds in its function to that of the antenna coil 19 of Fig. 1.

The integrated circuit 14 has a processor 17 whose operating speed or computing power depends on the level of the applied field strength. At a minimum electromagnetic field strength, the processor 17 and also the integrated circuit 14 start operation. As the field strength increases, the operating frequency of the processor 17 and also of the integrated circuit 14 increases, and thus the processing speed increases. Above a cut-off frequency, there is no further increase in the operating frequency. The processor 17 and also the integrated circuit 14 are in a saturation state and operate at maximum frequency.

The processor 17 performs computational operations to provide a function to an application on the card reader, such as a signature that allows the application to access protected data or services. The signature may be stored in the memory 18, and the processor 17 accesses it when the application has authenticated itself on the card reader.

The smart card 10 may be a so-called DI card, with a high quality interconnection technology between integrated circuit 14 and coil 16. Preferably, this is either a soldered connection or a welded connection.

In addition, the smart card 10 may be equipped with an operating system (OS, Operating System) capable of receiving and transmitting data at a predetermined carrier frequency, such as 13.56 MHz.

Fig. 4 schematically shows a card body 11 that comprises three layers: the front layer 111, the rear layer 112, and the antenna layer 113. The antenna layer 113 includes the electronic circuitry described with reference to Figs. 1 to 3, in particular the antenna coil 19 and the chip module 12. However, the front layer 111 may additionally or alternatively also include a chip module 12, as shown in Fig. 4.

The layers 111, 112, 113 are shown in an exploded view before they are joined together to form the card body 11. In the example of Fig. 4, the front layer 111 and the rear layer 112 are made of wood, i.e., the entire front layer 111 and the entire rear layer 112 are wooden.

The front layer 111 and/or the rear layer 112 may each be composed of a single wooden sheet with a predetermined thickness.

Before the front layer 111, the rear layer 112, and the antenna layer 113 are laminated together to form the card body 11, the front layer 111 and/or the rear layer 112 undergo thermal treatment as described with reference to Figs. 5 to 7.

Figs. 5 to 7 show different ways of applying thermal energy to the outer surface 116 of the front layer 111. While reference is made to the front surface 111 in the Figs. 5 to 7, it is to be understood that the same steps may also be applied in a similar manner to the rear layer 112.

The thermal energy is applied to the outer surface 116 of the front layer 111 in order to slightly charr or darken the surface 116 of the wood to achieve wood preservation.

Fig. 5 shows a thermal energy source which is a beam emitter 50. The beam emitter 50 emits a beam 55 like a laser beam, a plasma beam, or a concentrated fire jet towards the surface 116 of the front layer 111. The surface 116 is heated to a predetermined temperature for a given period of time. The beam emitter 50 may also perform a corona treatment process to the surface 116.

By applying the beam 55 to the surface 116 of the wooden front layer 111, the wooden front layer is charred up to a certain depth (depending on the temperature and the period of time the beam is applied to the surface 116) in the surface 116, thereby achieving a different level of preservation (resistance to external influences), color, and color tone of the wooden front layer 111.

The beam emitter 50 may be moved along the surface 116 at a predetermined distance from the surface 116 and following a pattern of movement so that the entire surface 116 is subject to the thermal treatment. A controller (not shown) may control movement of the beam emitter 50. However, the front layer 111 may be moved relative to the beam emitter instead of moving the beam emitter, e.g., by moving a supporting unit that holds the front layer. In another example, the beam emitter 50 and the front layer 111 may be moved.

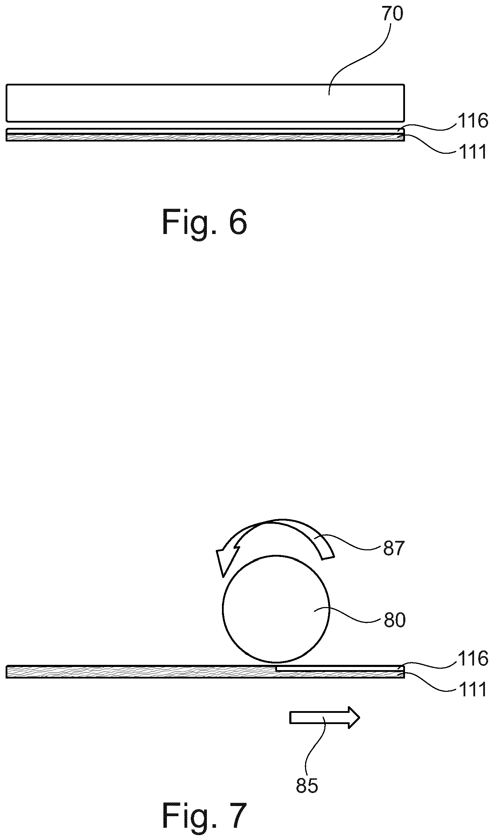

Fig. 6 shows a heating plate 70 used as a thermal energy source. The heating plate 70 is heated to the first predetermined temperature and is then pressed onto the surface 116 of the front layer 111. The heating plate 70 may be heated by electrical current flowing through lines that are arranged in the heating plate 70. However, other methods of heating the heating plate to the predetermined temperature can also be used. When the heating plate is heated to the predetermined temperature value, it is pressed onto the surface 116 and is held in this position for a predetermined period of time. When the heating plate is in this position, it may be continuously heated to hold the temperature value constant. After expiry of the period of time, the heating plate 70 is moved away from the surface 116.

An actuator like an electric, hydraulic, or pneumatic drive, for example, may be provided that moves the heating plate 70 towards and away from the surface 116. Such an actuator may be controlled by a controller to carry out the steps of the method in an automated manner.

In the example of Fig. 6, the heating plate 70 may be shaped such that is covers the entire surface 116 of the front layer 111.

Fig. 7 shows a heating roll 80 used as a thermal energy source. The hearing roll 80 is pressed onto the surface 116 and rolls along the surface while the pressure force is still applied. For example, the front layer 111 may be moved along the direction 85, causing the heating roll 80 to perform a rotational movement 87. The heating roll 80 and/or the front layer 111 may be moved along the direction 85. The movement speed of the heating roll 80 is chosen such that the heating roll establishes a contact to any area on the surface 116 for the predetermined period of time.

The heating roll 80 may be heated to the desired temperature in a similar manner like the heating plate 70 described with reference to Fig. 6.

Once the front layer 111 has undergone the thermal treatment described in any one of Figs. 5 to 7, the rear layer 112 may also undergo similar or same thermal treatment. Optionally, the front layer 111 and/or the rear layer 112 may now undergo personalization and information may be applied to the surface 116 of the layers 111, 112. Last, the front layer 111, the rear layer 112, and the antenna layer 113 are laminated together to manufacture the card body 11, as shown in Fig. 4. A lamination device may be used for this step that applies a pressure to the stacked layers 111, 112, 113 so that these layers are laminated together. Optionally, after the lamination process, a coating may be applied to the outer surfaces of the front layer 111 and/or the rear layer 112.

Fig. 8 describes a method 150 for manufacturing a smart card 10 described with reference to Figs. 1 to 7. The method comprises the following steps: in a first step 152, providing a front layer 111, a rear layer 112, and an antenna layer 113 of a smart card body 11, wherein at least the front layer 111 comprises wood; in a second step 154, applying thermal energy to the front layer 111 by a thermal energy source 50, 70, 80 in order to heat the front layer 111 for a first predetermined period of time to a first predetermined temperature; in a third step 156, joining the front layer 111, the rear layer 112, and the antenna layer 113 with the antenna layer 113 being arranged between the front layer 111 and the rear layer 112. The third step 156 is carried out after the second step 154 and prior to the front layer 111 being joined with the antenna layer 113.

Additionally, it should be noted that "comprising" or "consisting" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as a limitation.

### List of reference signs

- 10: smart card
- 11: card body
- 12: chip module
- 13: main area, outer surface
- 14: integrated circuit
- 15: capacitor
- 16: coil
- 17: processor
- 18: memory
- 19: antenna coil
- 19-1: contact connection
- 19-2: contact connection
- 19-3: contact pad
- 50: beam emitter
- 55: high energy beam
- 70: heating plate
- 80: heating roll
- 85: moving direction
- 87: rotational movement
- 111: front layer
- 112: rear layer
- 113: antenna layer
- 116: outer surface
- 150: method
- 152-156: method steps

## Claims

1. A method (150) for manufacturing a smart card (10), the method comprising:
in a first step (152), providing a front layer (111), a rear layer (112), and an antenna layer (113) of a smart card body (11), wherein at least the front layer (111) comprises wood;
in a second step (154), applying thermal energy to the front layer (111) by a thermal energy source (50, 70, 80) in order to heat the front layer (111) for a first predetermined period of time to a first predetermined temperature;
in a third step (156), joining the front layer (111), the rear layer (112), and the antenna layer (113) with the antenna layer (113) being arranged between the front layer (111) and the rear layer (112);
wherein the third step (156) is carried out after the second step (154) and prior to the front layer (111) being joined with the antenna layer (113).

2. The method (150) of claim 1,
wherein the rear layer (112) comprises wood;
wherein the method further comprises, after the second step (154) and prior to the third step (156), applying thermal energy to the rear layer (112) by the thermal energy source (50, 70, 80) in order to heat the rear layer (112) for a second predetermined period of time to a second predetermined temperature.

3. The method (150) of claim 1 or 2,
wherein in the third step (156), the front layer (111), the rear layer (112), and the antenna layer (113) are joined by a lamination process.

4. The method (150) of any one of the preceding claims,
further comprising, after the third step (156), applying a clear coating to the front layer (111) and/or to the rear layer (112).

5. The method (150) of any one of the preceding claims,
further comprising, as part of the second step (154), or after the second step (154) and prior to the third step (156), applying a personalization feature to the front layer (111) and/or to the rear layer (112) by locally applying heat to the front layer (111) and/or to the rear layer (112).

6. The method (150) of claim 5,
wherein the personalization feature is applied by using the thermal energy source (50, 70, 80) used in the second step (154).

7. The method (150) of any one of the preceding claims,
wherein, in the second step (154), thermal energy is applied by the thermal energy source (50, 70, 80) to an entirety of an outer surface (13) of the front layer (111).

8. The method (150) of any one of the preceding claims,
wherein the first predetermined temperature in the second step (154) is equal to or above an ignition temperature of the front layer (111).

9. The method (150) of any one of the preceding claims,
wherein the first predetermined temperature in the second step (154) is above 280°C.

10. The method (150) of any one of the preceding claims,
wherein the thermal energy source (50, 70, 80) is a beam source configured to emit a laser beam, a concentrated fire jet, high density plasma towards the front layer (111).

11. The method (150) of any one of the claims 1 to 9,
wherein the thermal energy source (50, 70, 80) is configured to perform corona treatment of the front layer (111).

12. The method (150) of any one of the claims 1 to 9,
wherein the thermal energy source (50, 70, 80) is a heating plate (70) that is heated to the first predetermined temperature and pressed onto the front layer (111) for the first predetermined period of time.

13. The method (150) of any one of the claims 1 to 9,
wherein the thermal energy source (50, 70, 80) is a heating roll (80) that is heated to the first predetermined temperature and the heating roll (80) is moved relative to the front layer (111) such that the first predetermined temperature is applied to a contact surface between the heating roll (80) and the front layer (111) for the first predetermined period of time.

## Amended claims

### Amended claims in accordance with Rule 137(2) EPC.

1. A method (150) for manufacturing a smart card (10), the method comprising:
in a first step (152), providing a front layer (111), a rear layer (112), and an antenna layer (113) of a smart card body (11), wherein at least the front layer (111) comprises wood;
in a second step (154), applying thermal energy to the front layer (111) by a thermal energy source (50, 70, 80) in order to heat the front layer (111) for a first predetermined period of time to a first predetermined temperature;
in a third step (156), joining the front layer (111), the rear layer (112), and the antenna layer (113) with the antenna layer (113) being arranged between the front layer (111) and the rear layer (112);
wherein the second step (154) is carried out prior to the third step (156) and prior to the front layer (111) being joined with the antenna layer (113).

2. The method (150) of claim 1,
wherein the rear layer (112) comprises wood;
wherein the method further comprises, after the second step (154) and prior to the third step (156), applying thermal energy to the rear layer (112) by the thermal energy source (50, 70, 80) in order to heat the rear layer (112) for a second predetermined period of time to a second predetermined temperature.

3. The method (150) of claim 1 or 2,
wherein in the third step (156), the front layer (111), the rear layer (112), and the antenna layer (113) are joined by a lamination process.

4. The method (150) of any one of the preceding claims,
further comprising, after the third step (156), applying a clear coating to the front layer (111) and/or to the rear layer (112).

5. The method (150) of any one of the preceding claims,
further comprising, as part of the second step (154), or after the second step (154) and prior to the third step (156), applying a personalization feature to the front layer (111) and/or to the rear layer (112) by locally applying heat to the front layer (111) and/or to the rear layer (112).

6. The method (150) of claim 5,
wherein the personalization feature is applied by using the thermal energy source (50, 70, 80) used in the second step (154).

7. The method (150) of any one of the preceding claims,
wherein, in the second step (154), thermal energy is applied by the thermal energy source (50, 70, 80) to an entirety of an outer surface (13) of the front layer (111).

8. The method (150) of any one of the preceding claims,
wherein the first predetermined temperature in the second step (154) is equal to or above an ignition temperature of the front layer (111).

9. The method (150) of any one of the preceding claims,
wherein the first predetermined temperature in the second step (154) is above 280°C.

10. The method (150) of any one of the preceding claims,
wherein the thermal energy source (50, 70, 80) is a beam source configured to emit a laser beam, a concentrated fire jet, or high density plasma towards the front layer (111).

11. The method (150) of any one of the claims 1 to 9,
wherein the thermal energy source (50, 70, 80) is configured to perform corona treatment of the front layer (111).

12. The method (150) of any one of the claims 1 to 9,
wherein the thermal energy source (50, 70, 80) is a heating plate (70) that is heated to the first predetermined temperature and pressed onto the front layer (111) for the first predetermined period of time.

13. The method (150) of any one of the claims 1 to 9,
wherein the thermal energy source (50, 70, 80) is a heating roll (80) that is heated to the first predetermined temperature and the heating roll (80) is moved relative to the front layer (111) such that the first predetermined temperature is applied to a contact surface between the heating roll (80) and the front layer (111) for the first predetermined period of time.
